# EUROPÄISCHE PATENTANMELDUNG

(11) **EP 2 135 731 A1**
(43) Veröffentlichungstag der Anmeldung: **23.12.2009**
(21) Anmeldenummer: 09005797.7
(22) Anmeldetag: 25.04.2009
(51) Int. Cl.: B32B 5/00

(54) **Selbsttragendes, thermisch und akustisch isolierendes Bauteil, insbesondere für Fahrzeuge, und Verfahren zu seiner Herstellung**

(30) Priorität: 21.06.2008 DE 102008029565
(71) Anmelder: HAPPICH Fahrzeug- und Industrieteile GmbH, 42285 Wuppertal (DE)
(72) Erfinder: Steiner, Matthias, Dr., 45549 Sprockhövel (DE)

(57) **Zusammenfassung**

Die Erfindung bezieht sich auf ein selbsttragendes, thermisch und akustisch isolierendes Bauteil (10), insbesondere für Fahrzeuge, mit einem Trägerteil (11) und einem Dämpfungsteil (12). Es ist dabei erfindungsgemäß vorgesehen, dass das Dämpfungsteil (12) aus einem Fasermaterial (13), einer duromeren Komponente, insbesondere einem Harz, und einer zusätzlichen Versteifung (14) als Trägerteil (11) besteht. Die Erfindung bezieht sich außerdem auf ein Verfahren zur Herstellung eines solchen selbsttragenden, thermisch und akustisch isolierenden Bauteils (10), insbesondere für Fahrzeuge.

## Beschreibung

Die Erfindung bezieht sich auf ein selbsttragendes, thermisch und akustisch isolierendes Bauteil, insbesondere für Fahrzeuge, mit einem Trägerteil und einem Dämpfungsteil. Die Erfindung bezieht sich außerdem auf ein Verfahren zur Herstellung eines solchen Bauteils.

Grundsätzlich sieht die bisherige Prozesstechnik zur Herstellung von thermisch und akustisch isolierenden Bauteilen im nicht sichtbaren Bereich von Fahrzeugen und von Halbzeugen für die Anwendung im sichtbaren Bereich von Fahrzeugen im One-Shot-Verfahren eine mehrschichtigen, symmetrischen oder assymetrischen Lagenaufbau bestehend aus den nachfolgend aufgezählten Materialien vor. Diese Materialien umfassen in der Regel ein Abdeckvlies, ein Baumwoll- oder Biowoll-Pressvlies, optional je nach Anforderung an die Steifigkeit des Teiles mit GF/UP-Verstärkung (SMC) sowie ein weiteres Abdeckvlies. Es wird dabei ein rechteckiger oder quadratischer Materialzuschnitt in einem Arbeitsschritt durch das Pressverfahren zur endgültigen Geometrie geformt und gleichzeitig beschnitten. Die Nachteile dieser Vorgehensweise werden nachfolgend zusammengefasst. Es entsteht zum einen durch das Beschneiden Produktionsabfall. Zum anderen sind je nach Geometrie sehr hohe Presskräfte notwendig, und je nach Materialeinsatz und Dicke des Bauteils sind lange Produktionszyklen bzw. hohe Produktionstemperaturen nötig, um die Reaktion der Bindeanteile in den Pressvliesen thermisch zu aktivieren.

Bzgl. der bekannten Verkleidungsteile bzw. der bekannten Verfahren zu deren Herstellung wird auf das DE-GM 92 07 113 verwiesen. In dieser Druckschrift ist offenbart ein selbsttragendes wärme- und schalldämmendes Verkleidungsteil, insbesondere für Kraftfahrzeuge, bestehend aus einem Trägerteil und einem damit verbundenen Dämpfungsteil. Dabei ist vorgesehen, dass das festhaftend mit dem Dämpfungsteil verbundene Trägerteil aus SMC (Sheet Moulding Compound) besteht. Eine derartige Ausbildung soll dabei den Vorteil bieten, dass aus einem Formwerkzeug Dämpfungsteil- und Trägerteil festhaftend verbunden miteinander hergestellt werden können. Dadurch könnten Werkzeug- und Montagekosten eingespart werden, wobei allerdings zu beachten sei, dass die Reaktionstemperaturen der unterschiedlichen Materialien angeglichen werden müssen. Ein derartiges Verkleidungsteil weist dabei genau die zuvor beschriebenen Nachteile auf.

Davon ausgehend liegt der Erfindung die Aufgabe zu Grunde, die bekannten Verkleidungsteile bzw. Verfahren zu deren Herstellung unter Beibehaltung der bisherigen Vorteile in der Weise zu verbessern bzw. weiter zu entwickeln, dass die genannten Nachteile vermieden werden, wobei insbesondere die Materialkosten und die Produktionszeiten gesenkt werden sollen. Dabei soll ein dämmendes Material entwickelt werden, das gleiche oder bessere thermische und akustische Eigenschaften hat als die zuvor bekannten Lösungen und kürzere Zykluszeiten erlaubt. Weiterhin soll die Verfahrenstechnik die Erweiterung des Materialkonzeptes für andere Fasermaterialien insbesondere auch für Materialien für Verkleidungsteile erlauben. Für die zuvor beschriebenen isolierenden Materialien soll dabei ein Fasermaterial gefunden werden, das jederzeit frei am Markt verfügbar ist und von mehreren Lieferanten bezogen werden kann.

Die Aufgabe wird bzgl. des selbsttragenden, thermisch und akustisch isolierenden Bauteils erfindungsgemäß dadurch gelöst, dass das Dämpfungsteil aus einem Fasermaterial, einer duromeren Komponente, insbesondere einem Harz und einer zusätzlichen Versteifung als Trägerteil besteht. Auf diese Weise wird erstmalig mit einfachen Mitteln ein selbsttragendes, thermisch und akustisch isolierendes Bauteil, insbesondere für Fahrzeuge geschaffen, bei dem das Fasermaterial beispielsweise aus Biowolle besteht, die beispielsweise in der Produktion von Dämmplatten als Abfall in großen Mengen anfällt (Flocken). Als duromere Komponente kann beispielsweise ein Harz verwendet werden, das bei Raumtemperatur mit Luftsauerstoff aushärtet. Bei der Herstellung des erfindungsgemäßen Bauteils wird dabei die zeitaufwendige Produktion der thermisch isolierenden Komponente zeitlich und räumlich getrennt von der Herstellung des fertigen Bauteils. Durch den Einsatz beispielsweise eines Netshape-Verfahrens wird dabei der Abfall durch das Beschneiden der Dämmung vermieden. Die neue Verfahrenstechnik besteht dabei im Wesentlichen aus den nachfolgenden beiden Schritten, nämlich der Fertigung der dämmenden Komponente sowie der anschließenden Endfertigung mit/ohne SMC sowie Vliesen. Bzgl. näherer Details wird auf die dazu weiter unten gemachten Ausführungen verwiesen.

Bei der bevorzugten Ausführungsform der vorliegenden Erfindung besteht die zusätzliche Versteifung aus harzgetränktem Flächenmaterial, wobei dieses harzgetränkte Flächenmaterial vorzugsweise im Wesentlichen aus Vlies oder bei einer anderen Ausführungsform im Wesentlichen aus Papiermaterialien bestehen kann.

Nach einem weiteren Merkmal der vorliegenden Erfindung ist vorgesehen, dass das Dämpfungsteil eine ein- oder beidseitige Beschichtung z. B. mit Vliesmaterial aufweist. Es weist dabei nach einem bzgl. des Bauteils letzten Merkmal der vorliegenden Erfindung das Dämpfungsteil eine zusätzliche Verstärkung, insbesondere eine SMC-Verstärkung, auf.

Die der Erfindung zu Grunde liegende Aufgabe wird bzgl. des Verfahrens zur Herstellung eines selbsttragendenden, thermisch und akustisch isolierendenden Bauteils, insbesondere für Fahrzeuge, erfindungsgemäß dadurch gelöst, dass zur Herstellung des Dämpfungsteils eine duromere Komponente, insbesondere ein Harz, mit einem Fasermaterial gemischt und anschließend mit einer zusätzlichen Versteifung als Trägerteil versehen wird. Bzgl. der sich dabei ergebenden Vorteile wird zur Vermeidung von Wiederholungen auf die beschriebenen Vorteile des erfindungsgemäßen Bauteils verwiesen. Zur Herstellung des Dämpfungsteils wird dabei die duromere Komponente mit dem Fasermaterial gemischt und als Schüttgut in eine Vorform gefüllt. Da die Faseranteile nach der Harzreaktion sehr spröde sind, muss das Dämpfungsteil mit einer zusätzlichen Versteifung versehen werden, wobei in bevorzugter Ausgestaltung des erfindungsgemäßen Verfahrens als zusätzliche Versteifung ein harzgetränktes Flächenmaterial verwendet wird, vorzugsweise im Wesentlichen Vlies oder bei einer anderen Ausführungsform im Wesentlichen Papiermaterial.

Nach einem weiteren Merkmal des erfindungsgemäßen Verfahrens erfolgt die Herstellung des Dämpfungsteils mittels eines Netshape-Verfahrens, wodurch wie erwähnt der Abfall durch das Beschneiden der Dämmung vermieden wird.

Zweckmäßig ist es nach einem weiteren Merkmal des erfindungsgemäßen Verfahrens, dass die duromere Komponente mit dem Fasermaterial und die zusätzliche Versteifung in einer Vorform vollständig ausreagiert werden. Dabei können in bevorzugter Ausgestaltung zur Beschleunigung der chemischen Vorgänge Temperaturen über 100 °C vorliegen.

Es empfiehlt sich nach einem weiteren Merkmal des erfindungsgemäßen Verfahrens, dass bei der abschließenden Endfertigung des Dämpfungsteils eine ein- oder beidseitige Beschichtung mit Vliesmaterial insbesondere mittels Pressvorgang erfolgt. Es wird dabei bei der abschließenden Endfertigung das Dämpfungsteil vorzugsweise mit einer zusätzlichen Verstärkung, insbesondere einer SMC-Verstärkung, versehen. Es wird dabei bei diesem letzten Produktionsschritt die Beschichtung des Dämpfungsteils mit Vliesen und/oder SMC vorzugsweise im klassischen Pressverfahren mittels eines geheizten Stahl-Werkzeugs durchgeführt. Es wird dabei nach einem letzten Merkmal des erfindungsgemäßen Verfahrens bei der Endfertigung das Dämpfungsteil gleichzeitig auf seine endgültige, geometrische Form gepresst.

Die Erfindung ist in der einzigen Figur der Zeichnung in einem Ausführungsbeispiel dargestellt. Es zeigt:

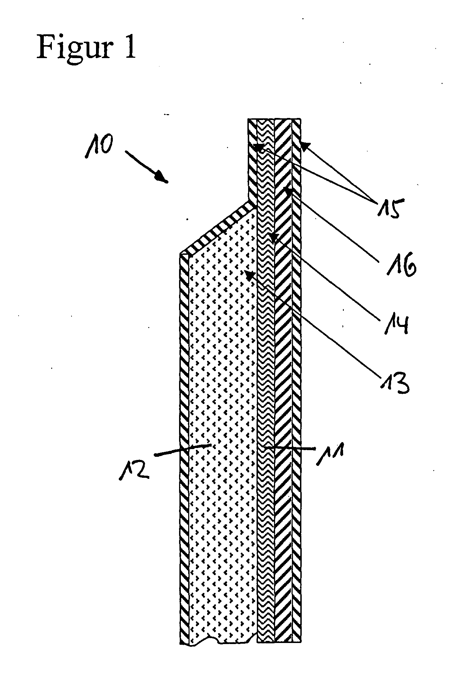

- Fig. 1: eine Teil-Querschnittsansicht durch ein erfindungsgemäßes selbsttragendes, thermisch und akustisch isolierendes Bauteils, insbesondere für Fahrzeuge, in der einzigen Ausführungsform.

Das erfindungsgemäße selbsttragende, thermisch und akustisch isolierende Bauteil, insbesondere für Fahrzeuge, ist generell mit 10 bezeichnet und in der einzigen Figur der Zeichnung in einer Teil-Querschnittsansicht dargestellt. Das erfindungsgemäße Bauteil 10 besteht dabei aus einem Trägerteil 11 und einem Dämpfungsteil 12 und ist z. B. vorgesehen für eine Verwendung im Bereich der Isolierung bei LKW. Dabei ist erfindungsgemäß vorgesehen, dass das Dämpfungsteil 12 aus einem Fasermaterial 13, einer duromeren, in der Figur der Zeichnung nicht separat dargestellten Komponente, insbesondere einem Harz, und einer zusätzlichen Versteifung 14 als Trägerteil 11 besteht. Auf diese Weise wird erstmalig mit einfachen Mitteln ein solches Bauteil 10 geschaffen, bei dem das Fasermaterial 13 aus Biowolle bestehen kann, die in der Produktion von Dämmplatten als Abfall in großen Mengen anfällt (Flocken). Als duromere Komponente wird dabei ein Harz verwendet, das bei Raumtemperatur mit Luftsauerstoff aushärtet. Bei der Herstellung des erfindungsgemäßen Bauteils 10 wird dabei die zeitaufwendige Produktion der thermisch isolierenden Komponente zeitlich und räumlich getrennt von der Herstellung des fertigen Bauteils durchgeführt. Durch den Einsatz beispielsweise eines Netshape-Verfahrens wird dabei der Abfall durch das Beschneidung der Dämmung vermieden. Die neue Verfahrenstechnik besteht dabei im Wesentlichen aus den folgenden zwei Schritten, nämlich der Fertigung der dämmenden Komponente sowie der Endfertigung mit/ohne SMC sowie Vliesen. Bzgl. näherer Details wird weiter unten noch Weiteres ausgeführt.

In bevorzugter Ausgestaltung des erfindungsgemäßen Bauteils 10 besteht die zusätzliche Versteifung 14 aus harzgetränktem Flächenmaterial, vorzugsweise im Wesentlichen aus Vlies oder bei einer anderen Ausführungsform im Wesentlichen aus Papiermaterialien. Bei der in der Figur 1 der Zeichnung dargestellten Ausführungsform des erfindungsgemäßen Bauteils 10 weist das Dämpfungsteil 12 eine beidseitige Beschichtung 15 aus Vliesmaterial auf. Weiterhin weist bei dieser Ausführungsform das Dämpfungsteil 12 eine zusätzliche Verstärkung 16 in diesem Fall aus einem SMC-Material auf.

Bei dem Verfahren zur Herstellung des erfindungsgemäßen Bauteils 10 ist vorgesehen, dass zur Herstellung des Dämpfungsteils 12 eine duromere Komponente, insbesondere ein Harz, mit einem Fasermaterial 13 gemischt und anschließend mit einer zusätzlichen Versteifung 14 als Trägerteil 11 versehen wird. Zur Herstellung des Dämpfungsteils 12 wird dabei die duromere Komponente mit dem Fasermaterial 13 gemischt und als Schüttgut in eine Vorform gefüllt. Da die Faseranteile nach der Harzreaktion sehr spröde sind, muss das Dämpfungsteil 12 mit einer zusätzlichen Versteifung 14 versehen werden, wobei vorliegend dafür ein harzgetränktes Flächenmaterial verwendet wird, das z. B. im Wesentlichen aus Vlies oder bei einer anderen Ausführungsform im Wesentlichen aus Papiermaterial bestehen kann.

Die Herstellung des Dämpfungsteils 12 kann beispielsweise mittels Netshape-Verfahrens erfolgen, wodurch der Abfall durch das Beschneiden der Dämmung vermieden wird.

Die duromere Komponente mit dem Fasermaterial 13 und die zusätzliche Versteifung 14 werden vorliegend in einer Vorform vollständig ausreagiert. Dabei können zur Beschleunigung der chemischen Vorgänge Temperaturen über 100 °C zur Anwendung kommen.

Bei der abschließenden Endfertigung des Dämpfungsteils 12 erfolgt vorliegend eine beidseitige Beschichtung 15 mit Vliesmaterial, insbesondere mittels Pressvorgang. Weiterhin wird bei der Endfertigung das Dämpfungsteil 12 mit einer zusätzlichen Verstärkung 16, in diesem Fall einer SMC-Verstärkung versehen. Es wird dabei in diesem letzten Produktionsschritt die Beschichtung des Dämpfungsteils 12 mit der beidseitigen Beschichtung 15 und/oder SMC im klassischen Pressverfahren mittels eines geheizten Stahl-Werkzeugs durchgeführt. Bei der Endfertigung wird dabei gleichzeitig das Dämpfungsteil 12 auf seine endgültige, geometrische Form gepresst.

Wie bereits erwähnt, sind die dargestellten Ausführungsformen nur eine beispielsweise Verwirklichung der Erfindung diese ist nicht darauf beschränkt, es sind vielmehr noch mancherlei Abänderungen und Ausbildungen möglich. So sind insbesondere Abwandlungen in der konstruktiven Ausbildung des erfindungsgemäßen Bauteils 10 möglich, sowie entsprechende Abwandlungen bei dem Verfahren zur Herstellung des Bauteils 10.

### Bezugszeichenliste:

- 10.: Bauteil
- 11.: Trägerteil (von 10)
- 12.: Dämpfungsteil (von 10)
- 13.: Fasermaterial
- 14.: zusätzliche Versteifung (von 12)
- 15.: Beschichtung (von 10)
- 16.: zusätzliche Verstärkung (von 10)

## Patentansprüche

1. Selbsttragendes, thermisch und akustisch isolierendes Bauteil (10), insbesondere für Fahrzeuge, mit einem Trägerteil (11) und einem Dämpfungsteil (12), **dadurch gekennzeichnet, dass** das Dämpfungsteil (12) aus einem Fasermaterial (13), einer duromeren Komponente, insbesondere einem Harz, und einer zusätzlichen Versteifung (14) als Trägerteil (11) besteht.

2. Bauteil nach Anspruch 1, **dadurch gekennzeichnet, dass** die zusätzliche Versteifung (14) aus harzgetränktem Flächenmaterial besteht.

3. Bauteil nach Anspruch 2, **dadurch gekennzeichnet, dass** das harzgetränkte Flächenmaterial im Wesentlichen aus Vlies besteht.

4. Bauteil nach Anspruch 2, **dadurch gekennzeichnet, dass** das harzgetränkte Flächenmaterial im Wesentlichen aus Papiermaterialien besteht.

5. Bauteil nach einem der Ansprüche 1 bis 4, **dadurch gekennzeichnet, dass** das Dämpfungsteil (12) eine ein- oder beidseitige Beschichtung (15) z. B. mit Vliesmaterial aufweist.

6. Bauteil nach Anspruch 5, **dadurch gekennzeichnet, dass** das Dämpfungsteil (12) eine zusätzliche Verstärkung (16), insbesondere eine SMC-Verstärkung, aufweist.

7. Verfahren zur Herstellung eines selbsttragenden, thermisch und akustisch isolierenden Bauteils (10), insbesondere für Fahrzeuge, mit einem Trägerteil (11) und einem Dämpfungsteil (12), **dadurch gekennzeichnet, dass** zur Herstellung des Dämpfungsteils (12) eine duromere Komponente, insbesondere ein Harz, mit einem Fasermaterial (13) gemischt und anschließend mit einer zusätzlichen Versteifung (14) als Trägerteil (11) versehen wird.

8. Verfahren nach Anspruch 7, **dadurch gekennzeichnet, dass** bei der Herstellung des Dämpfungsteils (12) als zusätzliche Versteifung (14) ein harzgetränktes Flächematerial verwendet wird.

9. Verfahren nach Anspruch 8, **dadurch gekennzeichnet, dass** als harzgetränktes Flächenmaterial ein Vlies verwendet wird.

10. Verfahren nach Anspruch 8, **dadurch gekennzeichnet, dass** als harzgetränktes Flächenmaterial im Wesentlichen Papiermaterial verwendet wird.

11. Verfahren nach einem der Ansprüche 7 bis 10, **dadurch gekennzeichnet, dass** die Herstellung des Dämpfungsteils (12) mittels eines Netshape-Verfahrens erfolgt.

12. Verfahren nach einem der Ansprüche 7 bis 11, **dadurch gekennzeichnet, dass** die duromere Komponente mit dem Fasermaterial (13) und die zusätzliche Versteifung (14) in einer Vorform vollständig ausreagiert werden.

13. Verfahren nach Anspruch 12, **dadurch gekennzeichnet, dass** zur Beschleunigung der chemischen Vorgänge erhöhte Temperaturen über 100 °C vorliegen.

14. Verfahren nach einem der Ansprüche 7 bis 13, **dadurch gekennzeichnet, dass** bei der anschließenden Endfertigung des Dämpfungsteils (12) eine ein- oder beidseitige Beschichtung (15) z. B. mit Vliesmaterial insbesondere mittels Pressverfahren erfolgt.

15. Verfahren nach Anspruch 14, **dadurch gekennzeichnet, dass** bei der anschließenden Endfertigung das Dämpfungsteil (12) mit einer zusätzlichen Verstärkung (16), insbesondere einer SMC-Verstärkung, versehen wird.

16. Verfahren nach Anspruch 14 oder 15, **dadurch gekennzeichnet, dass** bei der Endfertigung das Dämpfungsteil 12 gleichzeitig auf seine endgültige, geometrische Form gepresst wird.
